# EUROPÄISCHE PATENTSCHRIFT

(11) **EP 3 348 746 B1**
(45) Veröffentlichungstag und Bekanntmachung des Hinweises auf die Patenterteilung: **14.04.2021**
(21) Anmeldenummer: 17000066.5
(22) Anmeldetag: 13.01.2017
(51) Int. Cl.: F16B 5/02, F16B 19/02, E04F 13/14, E04C 2/04, F16B 5/00, E04F 13/08

(54) **FASSADENPLATTENANORDNUNG**
FAÇADE PANEL ARRANGEMENT
SYSTÈME DE PANNEAUX DE FAÇADE

(43) Veröffentlichungstag der Anmeldung: 18.07.2018
(73) Patentinhaber: HALFEN GmbH, 40764 Langenfeld (DE)
(72) Erfinder: HERRNKIND, Volker, 60322 Frankfurt (DE); DREIKLUFT, Norbert, 50767 Köln (DE)
(74) Vertreter: Reinhardt, Annette

(56) Entgegenhaltungen:
- WO-A1-98/16705
- WO-A1-2014/021498
- DE-A1- 1 942 604
- JP-A- 2004 003 128

## Beschreibung

Die Erfindung betrifft eine Fassadenplattenanordnung der im Oberbegriff des Anspruchs 1 angegebenen Gattung.

Es ist bekannt, Fassadenplatten, die an einer Tragstruktur, beispielsweise der Wand eines Bauwerks, festgelegt sind, untereinander über ein Verstiftungssystem zu verbinden. Hierzu ist üblicherweise ein Stift vorgesehen, der in einer der Platten eingegossen wird und in eine Führung in der anderen Platte ragt, in der er geführt ist. Der Stift ist dabei vorteilhaft in einer Öffnung, Tasche oder Aussparung eingegossen, deren Durchmesser größer als der Durchmesser des Stiftes ist. Dadurch ist während des Montagevorgangs der Fassadenplatten bis zur Erhärtung der Vergussmasse eine Justierung des Stiftes möglich. Der Stift ist in der Führung in vertikaler Richtung beweglich und in horizontaler Richtung zumindest senkrecht zur Fassadenplattenebene gehalten.

Die WO 2014/021498 A1, die DE 1 942 604 A1, die JP 2004 003 128 A und die WO 98/16705 A1 zeigen Befestigungsvorrichtungen zur Befestigung von Fassadenplatten an einer Tragstruktur.

Der Erfindung liegt die Aufgabe zugrunde, eine alternative Fassadenplattenanordnung der gattungsgemäßen Art zu schaffen.

Diese Aufgabe wird durch eine Fassadenplattenanordnung mit den Merkmalen des Anspruchs 1 gelöst.

Die vorliegende Erfindung sieht vor, dass der Stift und die Führung des Verstiftungssystems nicht wie bei bekannten Fassadenplattenanordnungen in den Fassadenplatten angeordnet werden, sondern vollständig außerhalb der Fassadenplatten. Der Stift und die Führung sind dabei vorteilhaft im zwischen den Fassadenplatten und einer Tragstruktur gebildeten Zwischenraum angeordnet, so dass der Stift und die Führung von außen nicht sichtbar sind. Der Stift und die Führung sind jeweils über eine Verankerungseinrichtung an der zugeordneten Fassadenplatte festgelegt. Durch die Anordnung von Stift und Führung vollständig außerhalb der Fassadenplatten können auch bei vergleichsweise dünnen Fassadenplatten große Toleranzen zwischen planmäßiger und tatsächlicher Lage von Stift und Führung ausgeglichen werden. Es kann ein Stift mit bezogen auf die Dicke der Fassadenplatte vergleichsweise großem Außendurchmesser zum Einsatz kommen. Weder die auszugleichenden Toleranzen zwischen planmäßiger und tatsächlicher Lage von Stift und Führung noch der Durchmesser des Stifts sind durch die Dicke der Fassadenplatte begrenzt. Dies ist insbesondere bei sehr dünnen Fassadenplatten vorteilhaft, bei denen die senkrecht zur Fassadenplattenebene ausgleichbaren Lagetoleranzen durch die Dicke der Fassadenplatten begrenzt sind, wenn Stift und Führung innerhalb der Fassadenplatten angeordnet werden.

Im Einbauzustand sichert das Verstiftungssystem die Lage der Fassadenplatten in einer Richtung senkrecht zur Ebene der Fassadenplatten zueinander. In einer Richtung parallel zur Ebene der Fassadenplatten, insbesondere in vertikaler Richtung, lässt das Verstiftungssystem Relativbewegungen der Fassadenplatten zueinander zu. Das Verstiftungssystem lässt dabei Relativbewegungen der Fassadenplatten zueinander in Richtung einer Längsmittelachse des Stifts zu. Es kann für bestimmte Fassadenplattenanordnungen auch vorteilhaft sein, dass der Stift in der Führung auch in einer Richtung parallel zur Fassadenplattenebene und quer zur Längsmittelachse des Stifts, insbesondere in horizontaler Richtung, beweglich ist. Dies kann insbesondere durch eine im Querschnitt längliche Gestaltung der Führung, beispielsweise eine Gestaltung als Langloch oder mit ovalem Querschnitt, erreicht werden.

Ein einfacher Aufbau ergibt sich, wenn die Verankerungseinrichtungen mindestens teilweise in der zugeordneten Fassadenplatte eingegossen sind. Durch Eingießen der Verankerungseinrichtungen lässt sich auf einfache Weise eine gute Fixierung in den Fassadenplatten erreichen. Ein zusätzlicher Fertigungsschritt zur Fixierung der Verankerungseinrichtungen entfällt. Bohrungen in den Fassadenplatten zur Fixierung der Verankerungseinrichtungen können entfallen. Die Außenseite der Fassadenplatte wird durch die Verankerungseinrichtungen nicht beeinträchtigt, so dass sich ein ansprechendes Äußeres ergibt.

Die Führung ist vorteilhaft in einer Führungshülse ausgebildet. Vorteilhaft ist die Führungshülse zumindest während des Montagevorgangs gegenüber der zugeordneten Verankerungseinrichtung justierbar. Bevorzugt ist die Lage der Führungshülse nach dem Montagevorgang nicht mehr justierbar oder verstellbar, so dass nach der Montage eine sichere Positionierung der Fassadenplatten zueinander gewährleistet ist. Über die Führungshülse ist die Lage des Stifts gegenüber der der Führungshülse zugeordneten Fassadenplatte einstellbar. In einer ersten Ausführungsvariante ist der Stift in Richtung einer Längsmittelachse des Stifts beweglich und in allen Richtungen senkrecht zur Längsmittelachse unverschiebbar in der Führung geführt. Die Verstiftung lässt demnach nur Relativbewegungen der Fassadenplatten in Richtung der Längsmittelachse des Stifts zu. In einer zweiten, alternativen Ausführungsvariante ist der Stift nur senkrecht zur Fassadenplattenebene unverschiebbar in der Führung geführt. In Richtung der Längsmittelachse des Stifts sowie in einer Richtung quer zur Längsmittelachse des Stifts und parallel zur Ebene der Fassadenplatten lässt das Verstiftungssystem bei dieser Ausführungsvariante Relativbewegungen zwischen den Fassadenplatten zu. Dadurch verhindert das Verstiftungssystem nur Relativbewegungen der Fassadenplatten zueinander senkrecht zur Ebene der Fassadenplatten. Die Längsmittelachse des Stifts ist vorteilhaft parallel zur Ebene der Fassadenplatten ausgerichtet, so dass durch das Verstiftungssystem Relativbewegungen der Fassadenplatten senkrecht zur Ebene der Fassadenplatten vermieden werden. In der ersten Ausführungsvariante werden zusätzlich Relativbewegungen parallel zur Fassadenplattenebene und in Querrichtung des Stifts vermieden. Die Längsmittelachse des Stifts liegt in Einbaulage vorteilhaft vertikal. Die Ebene der Fassadenplatten ist vorteilhaft vertikal ausgerichtet.

Ein einfacher Aufbau ergibt sich, wenn die Führung mit der zugeordneten Verankerungseinrichtung über Vergussmasse verbunden ist. Während des Montagevorgangs wird die Vergussmasse eingefüllt und anschließend die Führung in der Vergussmasse gegenüber der Verankerungseinrichtung in der gewünschten Weise positioniert. Die Justierung der Führungshülse kann dabei über den in der Führungshülse angeordneten Stift erfolgen. Nach dem Aushärten der Vergussmasse ist die Führung gegenüber der Verankerungseinrichtung fest positioniert.

Zumindest in einer der beiden erfindungsgemäßen Varianten ist der Stift an der zugeordneten Verankerungseinrichtung über Vergussmasse gehalten. Während des Montagevorgangs wird die Vergussmasse eingefüllt und anschließend der Stift gegenüber der Verankerungseinrichtung in der gewünschten Weise positioniert. Nach dem Aushärten der Vergussmasse ist der Stift gegenüber der Verankerungseinrichtung fest positioniert. Um während des Aushärtens der Vergussmasse eine Bewegung des Stifts gegenüber der Verankerungseinrichtung zu vermeiden, sind vorteilhaft Mittel zur Fixierung des Stifts während des Aushärtens der Vergussmasse vorgesehen. Dies ist insbesondere dann vorteilhaft, wenn die Führung an der oberen Fassadenplatte der beiden übereinander angeordneten Fassadenplatten angeordnet ist. Die Mittel zur Fixierung des Stifts während des Aushärtens der Vergussmasse verhindern, dass der Stift in der Führung nach unten rutschen kann. Die Mittel zur Fixierung des Stifts sind insbesondere durch eine auf den Stift aufgesetzte Kappe gebildet, deren größte Außenabmessung, insbesondere deren Außendurchmesser größer als der Innendurchmesser der Führung ist. Es kann vorteilhaft sein, die Mittel zur Fixierung des Stifts an der Führung anzuordnen. Vorteilhaft sind in der Führungshülse Wülste oder Stege vorgesehen, die den Stift fixieren, oder die Führungshülse verengt sich zur Fixierung des Stifts. Insbesondere eine konische Verengung kann vorteilhaft sein. Dadurch kann auf einfache Weise verhindert werden, dass der Stift während des Aushärtens der Vergussmasse in der Führung nach unten rutschen kann.

Die Vergussmasse ist insbesondere in einer fest mit der zugeordneten Verankerungseinrichtung verbundenen Tasche angeordnet. Die Tasche ist vorteilhaft im Einbauzustand im Zwischenraum zwischen den Fassadenplatten und der Tragstruktur angeordnet und nach oben offen ausgebildet.

Vorteilhaft stützen sich die Fassadenplatten über eine Abstützvorrichtung in horizontaler Richtung an der Tragstruktur, beispielsweise einer Wand eines Bauwerks, ab. Ein einfacher Aufbau der Abstützvorrichtung ergibt sich, wenn an der mit der Vergussmasse gefüllten Tasche eine justierbare Abstützvorrichtung zur horizontalen Abstützung mindestens einer Fassadenplatte an einer Tragstruktur angeordnet ist. Die Abstützvorrichtung ist vorzugsweise durch eine in eine Mutter eingeschraubte Schraube gebildet. In besonders bevorzugter Gestaltung ist die Mutter fest mit der Tasche verbunden, und der Kopf der Schraube stützt sich an der Tragstruktur ab. Dadurch, dass die Abstützung nur über den Kopf der Schraube erfolgt, können nur horizontale Kräfte in die Tragstruktur eingeleitet werden, so dass sich ein definierter Spannungszustand ergibt. Das freie Ende der Schraube kann in die Tasche ragen und wird dadurch von der Vergussmasse umschlossen und fixiert.

Die Tasche ist in vorteilhafter Gestaltung an der Verankerungseinrichtung angeschweißt. Die Tasche besteht dabei vorzugsweise aus Metall und kann die Form eines nach oben offenen Quaders oder dergleichen besitzen. In alternativer Gestaltung ist vorgesehen, dass an einem die Tasche bildenden Bauteil mindestens ein Verankerungselement, insbesondere alle Verankerungselemente, der Verankerungseinrichtung ausgebildet sind. Das mindestens eine Verankerungselement, insbesondere alle Verankerungselemente, sind bevorzugt einteilig an dem die Tasche bildenden Bauteil ausgebildet. In vorteilhafter Gestaltung wird die Tasche durch ein Blechteil begrenzt, das etwa U-förmig gebogen ist und dessen freie Enden in die Fassadenplatte ragen und die Verankerungselemente bilden. Das Blechteil bildet bevorzugt die in Hochrichtung verlaufenden Seitenwände und die in Hochrichtung verlaufende Rückwand der Tasche. Eine Seite der Tasche wird insbesondere durch die Fassadenplatte selbst verschlossen. Die Tasche ist vorteilhaft durch einen von dem Blechteil separat ausgebildeten Boden nach unten verschlossen. Die Kräfte von dem Stift und/oder der Führung werden bei dieser Gestaltung über die Vergussmasse, das Material der Tasche und die Verankerungseinrichtung in die Fassadenplatte eingeleitet.

In alternativer vorteilhafter Gestaltung ist vorgesehen, dass die Verankerungseinrichtung durch eine Bewehrung gebildet ist, wobei die Bewehrung sich in die Tasche und in die zugeordnete Fassadenplatte erstreckt. Die Übertragung der von dem Stift und/oder der Führung ausgeübten Kräfte in die Fassadenplatten erfolgt bei dieser Gestaltung vorteilhaft nicht über das Material der Tasche, sondern über die Vergussmasse und die Bewehrung unmittelbar in die zugeordnete Fassadenplatte. Die Tasche ist vorteilhaft mindestens teilweise durch ein Formteil gebildet, das die Gussform für die Vergussmasse bildet. Die Tasche muss dabei im Betrieb keine Kräfte aufnehmen. Dadurch kann die Tasche aus Material geringer Festigkeit, beispielsweise als Kunststoffspritzgussteil, gebildet sein.

Eine vorteilhafte Gestaltung ergibt sich, wenn sowohl der Stift als auch die Führung in einer Tasche mit Vergussmasse eingegossen sind. Vorzugsweise sind beide Taschen und beide Verankerungseinrichtungen bis auf eine Öffnung im Boden einer der Taschen, insbesondere der im Einbauzustand oben angeordneten Tasche, identisch ausgebildet. Durch die Öffnung im Boden der oberen Tasche können der Stift und gegebenenfalls eine Führungshülse oder dergleichen ragen. Es kann vorteilhaft sein, dass der Stift oder die Führungshülse an der Öffnung fixiert sind. Der Boden der unteren Tasche ist vorzugsweise geschlossen ausgebildet. Um beide Taschen und Verankerungseinrichtungen mit gleichen Teilen herstellen zu können, kann es vorteilhaft sein, den Boden mit einer Sollbruchstelle zum Ausbrechen eines Teils des Bodens zur Herstellung der Öffnung zu versehen. Dadurch kann das gleiche Teil für den Boden der oberen und der unteren Tasche genutzt werden. Dadurch ergibt sich ein einfacher Aufbau, und die Anzahl der benötigten Teile und somit auch der Aufwand für Lagerhaltung und Logistik werden verringert.

Es kann vorteilhaft sein, dass die Führung über eine Schraubverbindung mit der Verankerungseinrichtung verbunden ist. Um auf einfache Weise sicherzustellen, dass die Führung nach der Montage nicht mehr verstellt werden kann, kann die Führung zur Justierung in ein ortsfest angeordnetes Gegengewinde geschraubt werden. Die Achse der Schraubverbindung verläuft vorteilhaft quer zur Längsmittelachse des Stifts. Sobald der Stift durch die Führung geführt ist, kann die Führung nicht mehr gedreht werden und ist dadurch ortsfest gehalten.

Eine einfache Gestaltung ergibt sich, wenn der Stift an der zugeordneten Verankerungseinrichtung über eine Schweißverbindung gehalten ist. Der Stift ist dadurch fest mit der zugeordneten Fassadenplatte verbunden.

Die vorliegende Erfindung ist insbesondere für Fassadenplatten mit einer Dicke von weniger als 50 mm, insbesondere weniger als 40 mm, vorgesehen. Die Fassadenplatten besitzen bevorzugt eine Dicke von etwa 30 mm. Die Fassadenplatten sind insbesondere Betonplatten. Beton umfasst dabei insbesondere auch hochfesten Beton und ultrahochfesten Beton (UHPC). In bevorzugter Gestaltung sind die Fassadenplatten mit einer Bewehrung versehen. Die Bewehrung kann insbesondere eine Textil-, Edelstahl- oder Faserbewehrung sein. In bevorzugter Gestaltung ist die Bewehrung, insbesondere die Textilbewehrung, mindestens teilweise aus glasfaserverstärktem Kunststoff (GFK). Vorteilhaft erstreckt sich die Verankerungseinrichtung über mindestens die Hälfte, insbesondere mindestens 75 % der Dicke der zugeordneten Fassadenplatte. Die zugeordnete Fassadenplatte ist die Fassadenplatte, an der die jeweilige Verankerungseinrichtung verankert ist. Dadurch, dass sich die Verankerungseinrichtung über mehr als die Hälfte der Dicke der zugeordneten Fassadenplatte erstreckt, kann auf einfache Weise eine sichere Verankerung erreicht werden.

Ausführungsbeispiele der Erfindung werden im Folgenden anhand der Zeichnung erläutert. Es zeigen:
- Fig. 1: eine schematische, ausschnittsweise Seitenansicht einer Fassadenplattenanordnung,
- Fig. 2: eine schematische Darstellung eines Schnitts entlang der Linie II-II in Fig. 1,
- Fig. 3: eine Seitenansicht von Verankerungseinrichtung und Stift der oberen Fassadenplatte,
- Fig. 4: eine Ansicht von Stift und Befestigungsplatte der Anordnung aus Fig. 3,
- Fig. 5: eine Ansicht in Richtung des Pfeils V in Fig. 4,
- Fig. 6: eine Ansicht der Befestigungsplatte aus den Figuren 4 und 5,
- Fig. 7: eine Seitenansicht der Verankerungseinrichtung und der daran angeordneten Tasche der an der unteren Fassadenplatte angeordneten Verankerungseinrichtung,
- Fig. 8: eine Ansicht der Tasche in Richtung des Pfeils VIII aus Fig. 7 ohne die Verankerungseinrichtung,
- Fig. 9: eine Seitenansicht in Richtung des Pfeils IX in Fig. 8,
- Fig. 10: eine schematische, ausschnittsweise Seitenansicht eines Ausführungsbeispiels einer Fassadenplattenanordnung an einer Tragstruktur,
- Fig. 11: eine Ansicht der Vergussplatte und der daran angeordneten Tasche der Anordnung aus Fig. 10,
- Fig. 12: eine Seitenansicht in Richtung des Pfeils XII in Fig. 11,
- Fig. 13: eine schematische, ausschnittsweise Seitenansicht eines weiteren Ausführungsbeispiels einer Fassadenplattenanordnung,
- Fig. 14: eine schematische Darstellung einer an der Fassadenplatte angeordneten Tasche,
- Fig. 15: eine Draufsicht auf ein die Tasche bildendes Blechteil,
- Fig. 16: eine Seitenansicht in Richtung des Pfeils XVI in Fig. 15,
- Fig. 17: eine Draufsicht auf das den Boden der Tasche bildende Teil,
- Fig. 18: eine schematische, ausschnittsweise Seitenansicht eines weiteren Ausführungsbeispiels einer Fassadenplattenanordnung,
- Fig. 19: den Bereich der oberen Fassadenplatte aus Fig. 18 während der Montage,
- Fig. 20: eine schematische Draufsicht der Führung und der Verankerungseinrichtung aus Fig. 19 in einer alternativen Ausführungsvariante,
- Fig. 21: eine schematische Seitenansicht in Richtung des Pfeils XXI in Fig. 20,
- Fig. 22: eine ausschnittsweise schematische Seitenansicht eines weiteren Ausführungsbeispiels einer Fassadenplattenanordnung,
- Fig. 23: eine vergrößerte Darstellung einer Tasche der Fassadenplattenanordnung,
- Fig. 24: eine Draufsicht auf die Tasche an der unteren Fassadenplatte in Richtung des Pfeils XXIV in Fig. 22 und
- Fig. 25: eine Draufsicht auf die Tasche an der oberen Fassadenplatte in Richtung des Pfeils XXV in Fig. 22.

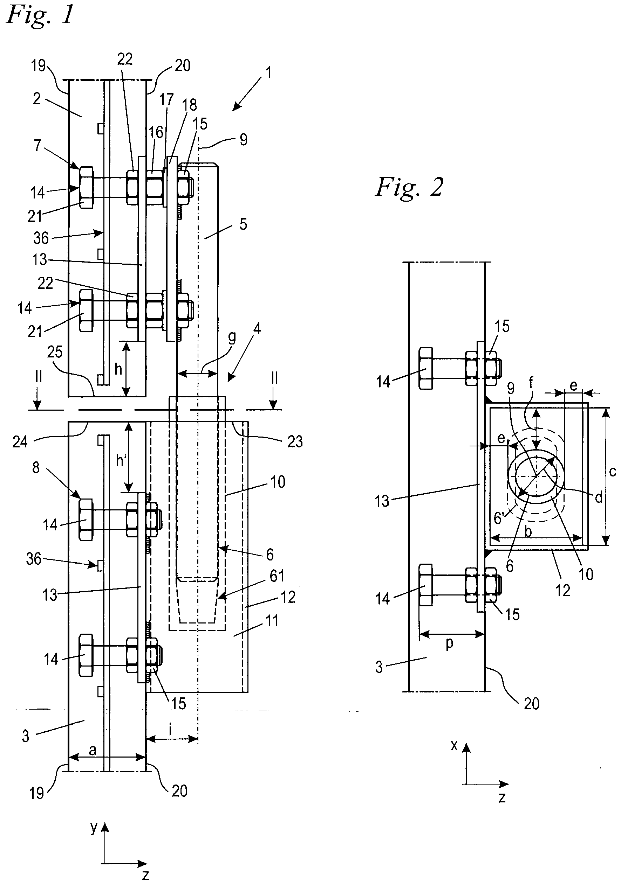

Fig. 1 zeigt schematisch eine Fassadenplattenanordnung 1 mit einer oberen Fassadenplatte 2 und einer unteren Fassadenplatte 3. Die obere Fassadenplatte 2 ist oberhalb der unteren Fassadenplatte 3 in geringem Abstand zur unteren Fassadenplatte 3 angeordnet. Die Fassadenplatten 2 und 3 sind an einer in Fig. 1 nicht gezeigten Tragstruktur fixiert. Die Fassadenplatten 2 und 3 sind in einer Hochrichtung y ausgerichtet, die vorteilhaft vertikal liegt. Auch eine schräge Anordnung der Tragstruktur und der Fassadenplatten 2 und 3 kann jedoch vorgesehen sein. Zur Positionierung der Fassadenplatten 2 und 3 und Fixierung der Fassadenplatten 2 und 3 zueinander in einer Tiefenrichtung z, die senkrecht zur Ebene der Fassadenplatten 2 und 3 ausgerichtet ist, ist ein Verstiftungssystem 4 vorgesehen. Das Verstiftungssystem 4 umfasst einen Stift 5, der in einer Führung 6 geführt ist. Der Stift 5 besitzt eine Längsmittelachse 9. Die Führung 6 führt den Stift 5 in Richtung der Längsmittelachse 9. Der Stift 5 ist in Richtung seiner Längsmittelachse 9 verschiebbar in der Führung 6 geführt. In Tiefenrichtung z und einer senkrecht zur Hochrichtung y und zur Tiefenrichtung z stehenden, in Fig. 2 gezeigten Seitenrichtung x ist der Stift 5 in der Führung 6 im Rahmen der üblichen Fertigungstoleranzen nicht beweglich. In einer alternativen Gestaltung ist der Stift 5 in Richtung seiner Längsmittelachse 9 und in Seitenrichtung x in einer Führung 6' beweglich und in Tiefenrichtung z nicht beweglich geführt. Die Führung 6' ist in Fig. 2 mit gestrichelter Linie eingezeichnet. Die Führung 6' ist im Querschnitt als Langloch ausgebildet. Auch eine Gestaltung mit ovalem Querschnitt kann vorteilhaft sein.

Die Fassadenplatten 2 und 3 sind mit ihren größten Abmessungen in Seitenrichtung x und Hochrichtung y ausgerichtet. In Tiefenrichtung z besitzen die Fassadenplatten 2 und 3 lediglich eine geringe Erstreckung. Fig. 1 zeigt die Anordnung in einer Neutrallage, die einer vorteilhaften Einbaulage entspricht. Wie Fig. 1 zeigt, besitzt die Führung 6 in dem in Neutrallage unterhalb des Stifts 5 angeordneten Bereich Mittel zur Fixierung des Stifts 5 in der Führung 6, die ein Rutschen des Stifts 5 in der Aufnahme 6 während der Montage verhindern. Die Mittel zur Fixierung des Stifts 5 verringern vorteilhaft den freien Querschnitt der Führung 6. Im Ausführungsbeispiel ist ein konischer Abschnitt 61, in dem der Innendurchmesser der Führung 6 sich konisch verringert, zur Fixierung des Stifts 5 vorgesehen. In vorteilhafter alternativer Gestaltung können die Mittel zur Fixierung des Stifts 5 Wülste, Stege oder dgl. in der Führung 6 umfassen.

Der Stift 5 und die Führung 6 sind jeweils über eine Verankerungseinrichtung 7, 8 an der zugeordneten Fassadenplatte 2, 3 gehalten. Der Stift 5 ist im Ausführungsbeispiel an der oberen Fassadenplatte 2 festgelegt. Hierzu ist der Stift 5 an einer Befestigungsplatte 18 festgeschweißt. Die Befestigungsplatte 18 ist an der Verankerungseinrichtung 7 fixiert. Die Verankerungseinrichtung 7 ist in die Fassadenplatte 2 eingegossen. Die Fassadenplatte 2 ist im Ausführungsbeispiel als Betonplatte ausgebildet und besitzt insbesondere eine Bewehrung 36, die in Fig. 1 schematisch dargestellt ist. In den weiteren Figuren ist keine Bewehrung 36 dargestellt. Eine Bewehrung 36 kann bei allen Ausführungsbeispielen vorteilhaft sein. Die Bewehrung 36 ist insbesondere eine Textil-, Edelstahl- und/oder Faserbewehrung. Im Ausführungsbeispiel ist die Bewehrung 36 eine Textilbewehrung, insbesondere aus glasfaserverstärktem Kunststoff (GFK). Die Bewehrung 36 ist im Ausführungsbeispiel eine einlagige, mittige Bewehrung. Es kann auch vorteilhaft sein, dass die Bewehrung außermittig angeordnet ist und/oder mehrlagig ausgebildet ist und/oder aus Fasern besteht.

Die Verankerungseinrichtung 7 besitzt im Ausführungsbeispiel Vergussanker 14, die jeweils eine Schraube 21 und eine auf die Schraube 21 aufgeschraubte Mutter 22 umfassen. Die Köpfe der Schrauben 21 bilden Hinterschnitte im Material der Fassadenplatte 2, so dass eine gute Verankerung erreicht wird. Die Verankerungseinrichtung 7 umfasst außerdem eine Vergussplatte 13, durch die die Vergussanker 14 bildenden Schrauben 21 ragen. Die Schrauben 21 sind einschließlich der Muttern 22 und der Vergussplatte 13 in die Fassadenplatte 2 eingebettet. Lediglich die über die Vergussplatte 13 hinausstehenden freien Enden der Schrauben 21 ragen aus der Fassadenplatte 2. Die Stirnseiten der Muttern 22 bilden eine Anlagefläche für die Vergussplatte 13. Die Vergussplatte 13 liegt bündig zu einer Innenseite 20 der Fassadenplatte 2. Die Innenseite 20 ist die einer Tragstruktur zugewandte Seite der Fassadenplatte 2. Die Vergussanker 14 ragen nicht bis auf eine der Innenseite 20 und der Tragstruktur abgewandt liegende Außenseite 19 der Fassadenplatte 2. Auf den freien Enden der Schrauben 21, die aus der Fassadenplatte 2 ragen, sind Abstandsmuttern 16 sowie Abstandsscheiben 17 angeordnet, die zur Positionierung der Befestigungsplatte 18 dienen und den Abstand zwischen der Innenseite 20 der Fassadenplatte 2 und der Befestigungsplatte 18 festlegen. Zur Fixierung der Befestigungsplatte 18 an den Vergussankern 14 sind auf die Schrauben 21 aufgeschraubte Befestigungsmuttern 15 vorgesehen.

Wie Fig. 1 zeigt, ist auch die Führung 6 mit einer Verankerungseinrichtung 8 verbunden. Die Verankerungseinrichtung 8 umfasst Vergussanker 14 sowie eine Vergussplatte 13. Die Gestaltung der Verankerungseinrichtung 8 entspricht der Gestaltung der Verankerungseinrichtung 7. An der Vergussplatte 13 ist eine Tasche 12 fixiert, im Ausführungsbeispiel festgeschweißt. Die Tasche 12 bildet eine Aufnahme für Vergussmasse 11. Die Führung 6 ist in einer Führungshülse 10 ausgebildet, die in der Vergussmasse 11 eingegossen ist. Bei der Montage wird zunächst die Führungshülse 10 auf dem Stift 5 positioniert und anschließend beim Absenken der oberen Fassadenplatte 2 zur unteren Fassadenplatte 3 in die Vergussmasse 11 gesenkt. Anschließend wird die Führungshülse in der ausgegossenen Tasche 12 positioniert.

Die obere Fassadenplatte 2 besitzt eine Unterseite 25, die der unteren Fassadenplatte 3 zugewandt liegt. Die untere Fassadenplatte 3 besitzt eine der oberen Fassadenplatte 2 zugewandte Oberseite 24. Die Verankerungseinrichtung 7 der oberen Fassadenplatte 2 ist in einem Randabstand h zur Unterseite 25 in das Material der oberen Fassadenplatte 2 eingebettet. Die Verankerungseinrichtung 8 der unteren Fassadenplatte 3 besitzt zur Oberseite 24 einen Randabstand h'. Wie Fig. 1 zeigt, ragt die Tasche 12 mit ihrer Oberkante 23 bis an die Oberseite 24 der unteren Fassadenplatte 3. Die Tasche 12 schließt demnach im Ausführungsbeispiel bündig mit der Oberseite 24 der unteren Fassadenplatte 3 ab. Wie Fig. 1 auch zeigt, ist die Längsmittelachse 9 des Stifts 5 in einem Abstand i zur Innenseite 20 der Fassadenplatten 2 und 3 angeordnet. Die Längsmittelachse 9 ist parallel zur Innenseite 20 und im Einbauzustand vorteilhaft vertikal ausgerichtet. Die Fassadenplatten 2 und 3 sind als dünne Fassadenplatten ausgebildet. Die Fassadenplatten 2 und 3 besitzen eine Dicke a, die kleiner als 50 mm, insbesondere kleiner als 40 mm ist. Im Ausführungsbeispiel beträgt die Dicke a etwa 30 mm. Die Dicke a ist in Tiefenrichtung z gemessen. Der Abstand i ist im Ausführungsbeispiel etwas kleiner als die Dicke a. Der Stift 5 besitzt einen Außendurchmesser g, der vorteilhaft mindestens 20%, insbesondere mindestens 30 %, im Ausführungsbeispiel etwa 50 % der Dicke a beträgt.

In Fig. 2 ist die Anordnung der Führungshülse 10 in der Tasche 12 im Einzelnen gezeigt. Die Tasche 12 besitzt an ihrer Innenseite eine in Tiefenrichtung z gemessene Tiefe b, die größer als 75% der Dicke a der Fassadenplatten 2 und 3 ist. Die Tasche 12 besitzt außerdem eine in Seitenrichtung x gemessene Breite c, die ebenfalls größer als die Dicke a der Fassadenplatte 3 ist. Im Ausführungsbeispiel ist die Breite c größer als die Tiefe b. Die Führungshülse 10 besitzt einen Außendurchmesser d. Der Außendurchmesser d beträgt vorteilhaft mindestens 20%, insbesondere mindestens 30% der Dicke a der Fassadenplatte 3 (Fig. 1). Der Außendurchmesser d kann vorteilhaft etwa 50% der Dicke a der Fassadenplatte 3 betragen. Wie Fig. 2 zeigt, besitzt die Führungshülse 10 in der gezeigten Neutrallage zu den Innenwänden der Tasche 12 in Tiefenrichtung z sowohl an der der Fassadenplatte 3 zugewandten Seite als auch an der der Fassadenplatte 3 abgewandten Seite einen Abstand e. Der Abstand e beträgt vorteilhaft in Neutrallage zwischen 5 mm und 15 mm. Dadurch kann die Position der Führungshülse 10 in Tiefenrichtung z um mindestens 5 mm in jede Richtung angepasst werden. Der Abstand e entspricht der halben Differenz der Tiefe b und des Außenmessers d.

In Seitenrichtung x besitzt die Führungshülse 10 zu beiden Innenseiten der Tasche 12 einen Abstand f. Der Abstand f entspricht der halben Differenz der Breite c und des Außendurchmessers d. Im Ausführungsbeispiel ist der Abstand f größer als der Abstand e. Der Abstand f beträgt vorteilhaft mindestens 10 mm. Bei der Führung 6' ergibt sich ein entsprechend verringerter Abstand f. Dadurch, dass der Stift 5 und die Führung 6 außerhalb der Fassadenplatten 2 und 3 angeordnet sind, können große Abstände e und f auch bei sehr geringer Dicke a einer Fassadenplatte 2, 3 erreicht werden.

Wie Fig. 2 zeigt, ragen die Vergussanker 14 über eine Tiefe p von der Innenseite 20 der Fassadenplatte 3 in die Fassadenplatte 3. Die Tiefe p beträgt vorteilhaft mindestens die Hälfte, insbesondere mindestens 75 % der Dicke a der Fassadenplatte 3. Entsprechend erstrecken sich die Vergussanker 14 über mindestens 50 %, insbesondere mindestens 75 % der Dicke a der oberen Fassadenplatte 2. Auch in allen anderen Ausführungsbeispielen ragen die Verankerungsvorrichtungen 7 und 8 vorteilhaft über mindestens die Hälfte, insbesondere über mindestens 75 % der Dicke a der zugeordneten Fassadenplatte 2, 3 von der Innenseite 20 in die Fassadenplatte 2, 3.

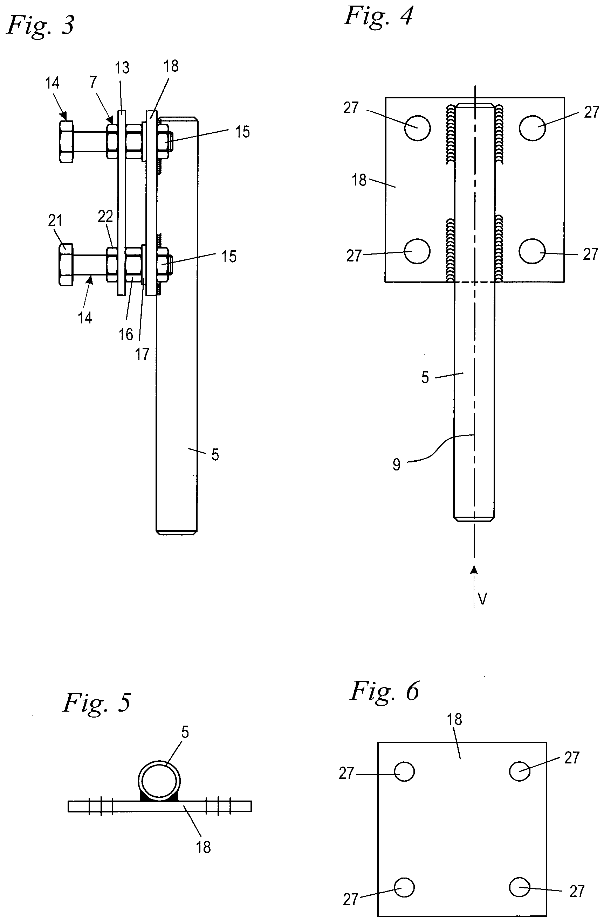

Fig. 3 zeigt die Fixierung des Stifts 5 an den Vergussankern 14. Die Vergussanker 14 bilden mit dem Stift 5 eine Baugruppe. Die Befestigungsplatte 18, an der der Stift 5 fixiert, im Ausführungsbeispiel festgeschweißt ist, kann nach dem Eingießen der Verankerungsvorrichtung 7 in die Fassadenplatte 2 an der Verankerungsvorrichtung über die Muttern 15 fixiert werden.

Wie Fig. 4 zeigt, besitzt die Befestigungsplatte 18 vier Öffnungen 27 zum Durchtritt der Schrauben 21, die die Vergussanker 14 bilden. Entsprechend sind vier Vergussanker 14 vorgesehen. Fig. 5 zeigt die Schweißverbindung zwischen dem Stift 5 und der Befestigungsplatte 18. Fig. 6 zeigt die Befestigungsplatte 18 mit den Öffnungen 27 ohne den daran festgeschweißten Stift 5.

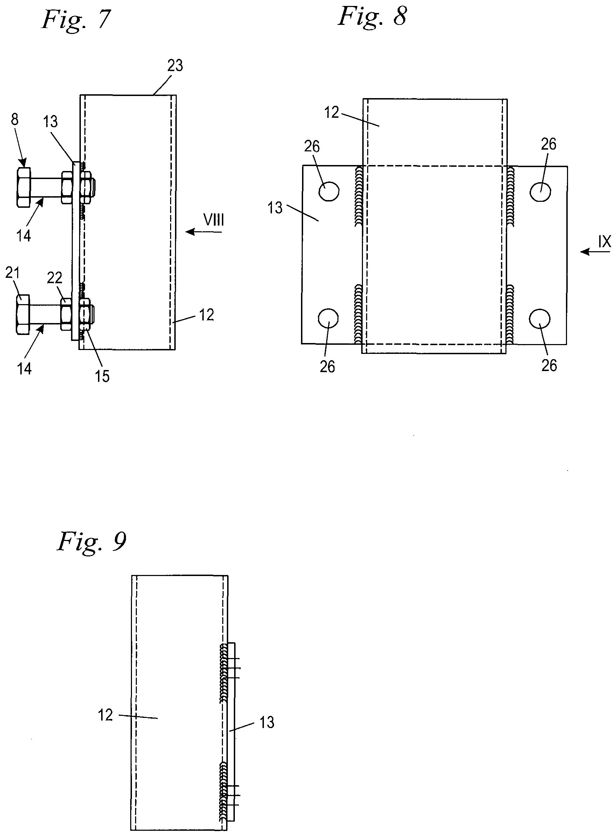

Fig. 7 zeigt die zweite Verankerungseinrichtung 8 mit der daran angeordneten Tasche 12. Die Tasche 12 ist unmittelbar an der Vergussplatte 13 festgeschweißt, wie auch die Figuren 8 und 9 zeigen. Wie Fig. 8 zeigt, besitzt die Vergussplatte 13 vier Öffnungen 26 zum Durchtritt der Schrauben 21. Auch die Verankerungseinrichtung 8 besitzt demnach vier Vergussanker. Wie die Figuren 7 bis 9 auch zeigen, überragt die Tasche 12 die Vergussplatte 13, nämlich um den Abstand h' (Fig. 1), so dass die Oberkante 23 der Tasche 12 im Einbauzustand bündig zur Oberseite 24 der Fassadenplatte 3 liegt. Auch ein anderer Abstand h' kann vorteilhaft sein, so dass die Oberkante 23 der Tasche 12 im Einbauzustand oberhalb oder unterhalb der Oberseite 24 der Fassadenplatte 3 liegt.

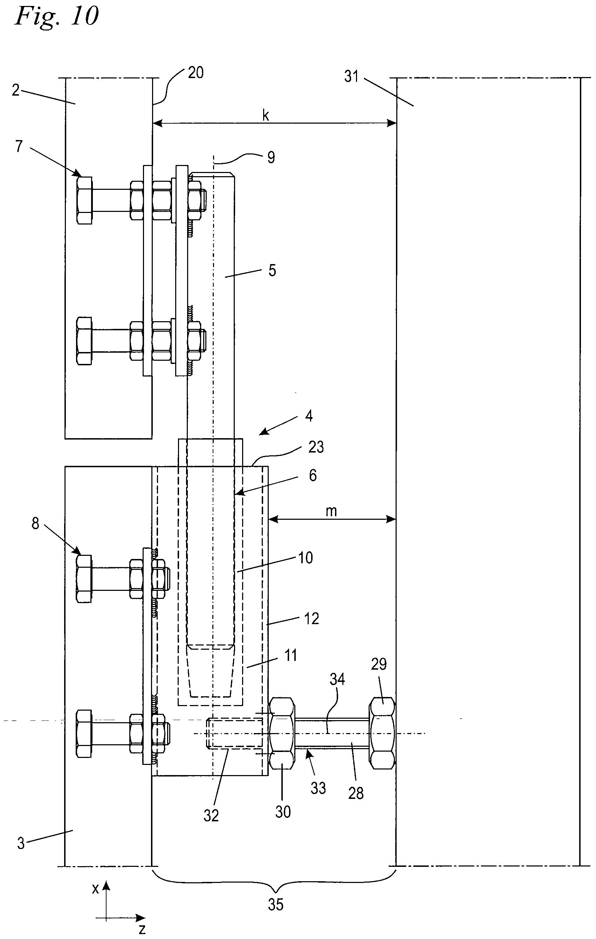

Fig. 10 zeigt ein alternatives Ausführungsbeispiel, das im Wesentlichen dem Ausführungsbeispiel nach den Figuren 1 bis 9 entspricht. Gleiche Bezugszeichen kennzeichnen in allen Figuren einander entsprechende Elemente. An der oberen Fassadenplatte 2 ist der Stift 5 über eine Verankerungsvorrichtung 7 fixiert. An der unteren Fassadenplatte 3 ist die Tasche 12 über eine zweite Verankerungseinrichtung 8 fixiert. An der Führungshülse 10 ist die Führung 6 ausgebildet. In Fig. 10 ist auch die Tragstruktur 31 gezeigt. Die Tragstruktur 31 ist in einem in Tiefenrichtung z gemessenen Abstand k zu den Innenseiten 20 der Fassadenplatten 2, 3 angeordnet. Dadurch ist ein Zwischenraum 35 zwischen den Fassadenplatten 2, 3 und der Tragstruktur 31 gebildet, in den die Verstiftungsanordnung 4 ragt. Wie Fig. 10 auch zeigt, besitzt die Tasche 12 zur Tragstruktur 31 einen Abstand m, der im Ausführungsbeispiel 30 % bis 70 % des Abstands k beträgt. Der Abstand m ist von einer Abstützvorrichtung 33 überbrückt. Über die Abstützvorrichtung 33 stützen sich die Fassadenplatten 2, 3 in horizontaler Richtung, also in Tiefenrichtung z, an der Tragstruktur 31 ab.

Die Abstützvorrichtung 33 umfasst eine Einstellmutter 30, die fest an der der Tragstruktur 31 zugewandt liegenden, der Fassadenplatte 3 abgewandt liegenden Seite der Tasche 12 fixiert ist. Im Ausführungsbeispiel ist die Einstellmutter 30 entfernt von der Oberseite 23 der Tasche 12 an der Tasche 12 angeordnet. Durch die Einstellmutter 30 ragt eine Abstützschraube 28 mit ihrem Ende 32 ins Innere der Tasche 12. Die Schraube 28 besitzt einen Kopf 29, der an der Tragstruktur 31 anliegt und dadurch die Fassadenplatte 3 an der Tragstruktur 31 abstützt. Aufgrund der Verstiftungsvorrichtung 4 können auch horizontale Kräfte aus der oberen Fassadenplatte 2 über die Abstützvorrichtung 33 in die Tragstruktur 31 eingeleitet werden. Die Abstützvorrichtung 33, nämlich die Abstützschraube 28, besitzt eine Längsmittelachse 34, die in Tiefenrichtung z, also senkrecht zur Außenseite der Tragstruktur 31, bevorzugt horizontal ausgerichtet ist. Da der Kopf 29 der Abstützschraube 28 lediglich an der Tragstruktur 31 anliegt, können über die Abstützvorrichtung 33 ausschließlich Kräfte in horizontaler Richtung in die Tragstruktur 31 eingeleitet werden. Vertikale Kräfte werden über geeignete, nicht gezeigte Befestigungseinrichtungen in die Tragstruktur 31 eingeleitet.

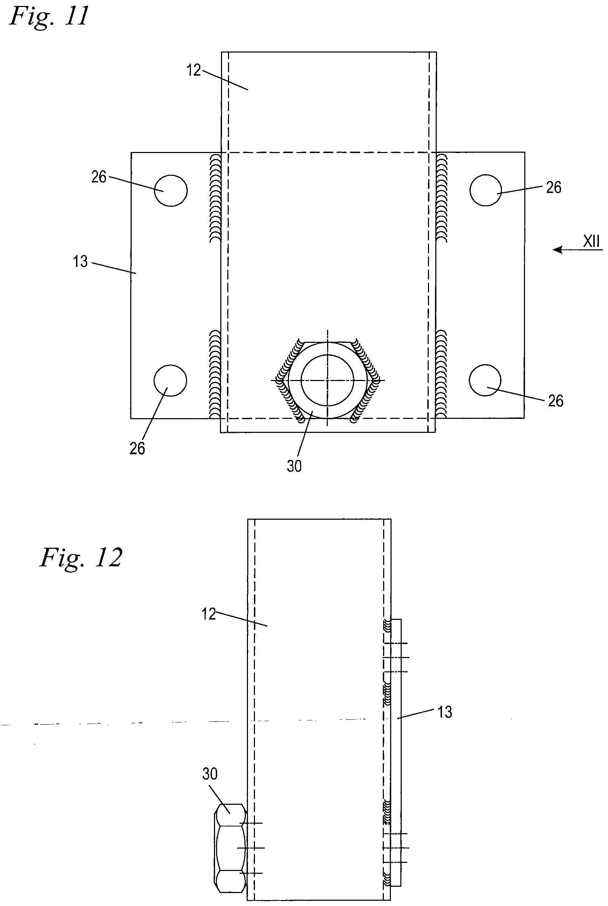

Wie die Figuren 11 und 12 zeigen, ist die Einstellmutter 30 an der Tasche 12 über eine Schweißverbindung fixiert. Auch eine andere Fixierung der Einstellmutter 30 kann vorteilhaft sein. Die Tasche 12 besitzt an der Einstellmutter 30 eine in Fig. 12 schematisch gezeigte Öffnung, durch die die Abstützschraube 28 (Fig. 10) ins Innere der Tasche 21 ragen kann. Auch eine andere justierbare Abstützvorrichtung kann vorteilhaft sein.

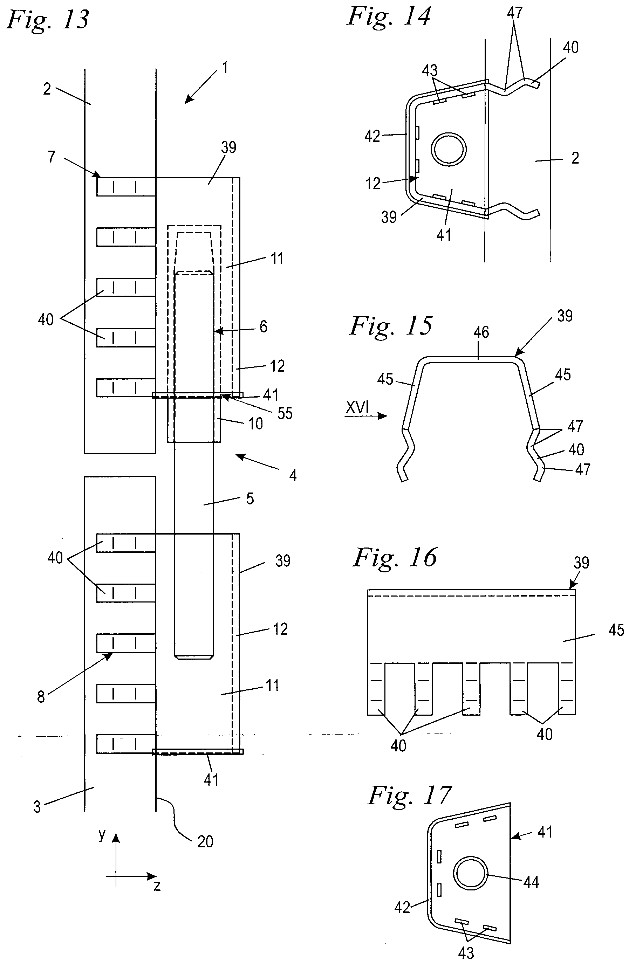

Fig. 13 zeigt eine weitere Ausführungsvariante der Fassadenplattenanordnung 1. Im Ausführungsbeispiel nach Fig. 13 ist die Führung 6 an der oberen Fassadenplatte 2 fixiert. Die Führung 6 ist dabei in einer Führungshülse 10 ausgebildet, die über Vergussmasse 11 an der oberen Fassadenplatte 2 fixiert ist. Der Stift 5 ragt in eine an der unteren Fassadenplatte 3 angeordnete Tasche 12, die mit Vergussmasse 11 ausgegossen ist. Dadurch ist der Stift 5 an der unteren Fassadenplatte 3 über Vergussmasse 11 gehalten. Die Tasche 12 ist in horizontaler Richtung durch ein Blechteil 39 begrenzt, das in den Figuren 15 und 16 gezeigt ist. Das Blechteil 39 ist näherungsweise U-förmig gebogen und bildet zwei Seitenwände 45 sowie eine Rückwand 46 der Tasche 12. Die Rückwand 46 liegt der Fassadenplatte 3 abgewandt. Die Seitenwände 45 verbinden die Innenseite 20 der Fassadenplatte 3 mit der Rückwand 46. Die Tasche 12 wird an der der Rückwand 46 abgewandt liegenden Seite durch die Innenseite 20 der Fassadenplatte 3 geschlossen.

An den Seitenwänden 45 sind an der der Rückwand 46 abgewandten Seite Verankerungselemente 40 ausgebildet, die in die Fassadenplatte 3 ragen, wie auch Fig. 13 zeigt. Wie Fig. 16 zeigt, sind an jeder Seitenwand 45 im Ausführungsbeispiel fünf Verankerungselemente 40 vorgesehen. Auch eine andere Anzahl von Verankerungselementen 40 kann vorteilhaft sein. Die Verankerungselemente 40 sind als einzelne, voneinander beabstandete Finger ausgebildet, die im Ausführungsbeispiel mit jeweils drei Biegungen 47 versehen sind. Die Biegungen 47 führen dazu, dass die Verankerungselemente 40 zur Tiefenrichtung z (Fig. 13) gebogen verlaufen und dadurch einen Hinterschnitt im Beton der Fassadenplatte 3 bilden.

Wie die Figuren 13 und 14 zeigen, ist die Tasche 12 nach unten, also zu der der Führung 6 abgewandten Seite, mindestens teilweise durch einen Boden 41 verschlossen. Der Boden 41 kann beispielsweise als Kunststoffspritzgussteil oder Metallteil ausgebildet sein. Der Boden 41 besitzt, wie die Figuren 14 und 17 zeigen, eine Umfangswand 42 sowie in einem Abstand zur Umfangswand 42 angeordnete Haltestege 43. Zwischen der Umfangswand 42 und den Haltestegen 43 ist das Blechteil 39 gehalten, vorzugsweise geklemmt gehalten. Wie Fig. 17 zeigt, ist am Boden 17 eine kreisförmige Sollbruchstelle 44 ausgebildet. Die Sollbruchstelle 44 kann beispielsweise durch Material geringerer Wandstärke gebildet sein. Wird das Material an der Sollbruchstelle 44 ausgebrochen, so entsteht eine Öffnung 55 im Boden 41, die in Fig. 13 an der oberen Tasche 12 gezeigt ist. Durch die Öffnung 55 ragt die Führungshülse 10 mit dem darin angeordneten Stift 5. In alternativer Gestaltung kann die Führungshülse 10 auch am Boden 41 der oberen Tasche 12 fixiert sein. Die untere Tasche 12 ist durch den Boden 41 nach unten vollständig verschlossen.

Wie Fig. 13 zeigt, ist an der oberen Fassadenplatte 2 die Führungshülse 10 fixiert. Die Führungshülse 10 ragt durch die Öffnung 55 in eine Tasche 12, die entsprechend zur Tasche 12 an der unteren Fassadenplatte 3 ausgebildet ist. Lediglich im Boden 41 ist die Öffnung 55 vorgesehen. Die Führungshülse 10 ist über Vergussmasse 11 in der Tasche 12 fixiert. Die Tasche 12 ist durch das Blechteil 39 und den Boden 41 gebildet und über Verankerungselemente 40, die in die Fassadenplatte 2 ragen und in diese einbetoniert sind, an der Fassadenplatte 2 fixiert. Die Verankerungseinrichtungen 7 und 8 und die Taschen 12 zur Fixierung des Stifts 5 bzw. zur Fixierung der Führungshülse 10 können dadurch bis auf die Öffnung 55 identisch ausgebildet sein. Die Taschen 12 sind aus den gleichen Bauteilen hergestellt.

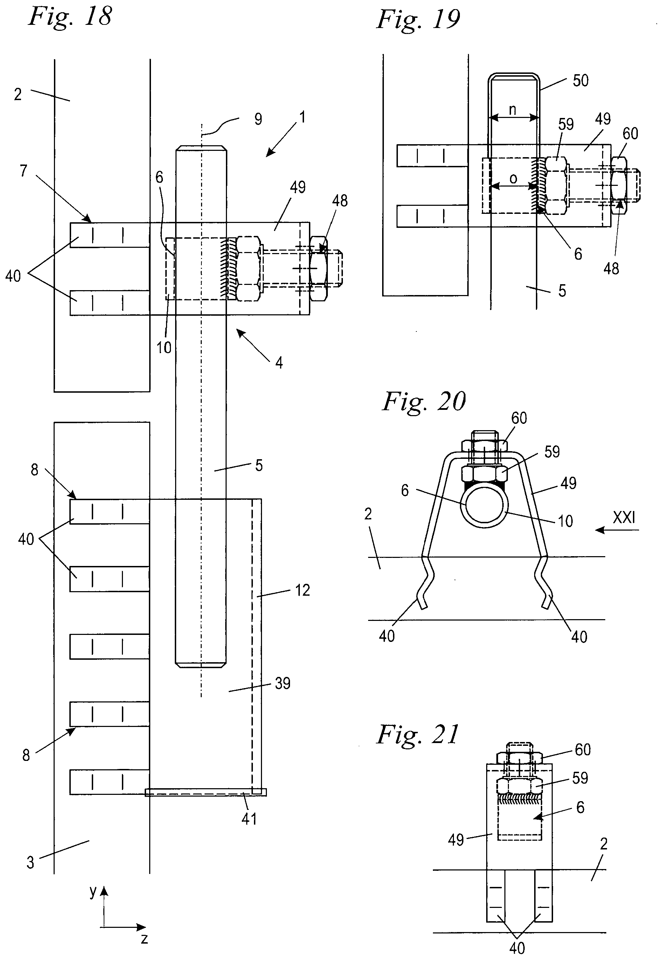

Fig. 18 zeigt ein alternatives Ausführungsbeispiel einer Fassadenplattenanordnung 1 mit einem Verstiftungssystem 4. An der unteren Fassadenplatte 3 ist eine Tasche 12 angeordnet, die der Tasche 12 im vorangegangenen Ausführungsbeispiel entspricht. Die Tasche 12 ist aus einem Blechteil 39 und einem Boden 41 gebildet. Das Blechteil 39 ragt mit Verankerungselementen 40 in die Fassadenplatte 3. Die Führung 6 für den Stift 5 ist an einer Führungshülse 10 ausgebildet, die als Ring ausgebildet ist. Das obere Ende des Stifts 5 ragt nach oben aus der Führungshülse 10 hinaus. Die Führungshülse 10 ist über eine Schraubverbindung 48 an einem Blechteil 49 fixiert, das zwei Verankerungselemente 40 besitzt, die im Material der oberen Fassadenplatte 2 eingegossen sind. Auch eine andere Fixierung der Führungshülse 10 an dem Blechteil 49, beispielsweise über eine Schweißverbindung, kann vorteilhaft sein. Das Blechteil 49 entspricht in seiner Gestaltung etwa dem Blechteil 39, ist jedoch kürzer ausgebildet. Die Gestaltung des Blechteils 49 ist insbesondere in Fig. 20 gezeigt. Wie die Fig. 19 zeigt, ist an der Führungshülse 10 eine Schraube 59 fixiert, im Ausführungsbeispiel festgeschweißt. Die Schraube 59 ist mit ihrer Längsachse quer zur Längsmittelachse 9 des Stifts 5 (Fig. 18) ausgerichtet. Im Ausführungsbeispiel verläuft die Längsachse der Schraube 59 in Tiefenrichtung z. Die Schraube 59 ragt mit ihrem Gewindebolzen durch eine Öffnung im Blechteil 49 auf die der Fassadenplatte 2 abgewandte Seite des Blechteils 49. An dieser Seite ist die Schraube 59 in eine Mutter 60 eingeschraubt, wie Fig. 19 zeigt. Die Mutter 60 ist am Blechteil 49 fixiert, beispielsweise über eine Schweißverbindung. Durch Drehen der Führungshülse 10 jeweils um 180° um die Längsachse der Schraube 59 kann der Abstand der Führung 6 zur Fassadenplatte 2 justiert werden. Wird anschließend der Stift 5 durch die Führung 6 gesteckt, so ist ein weiteres Verdrehen nicht mehr möglich, so dass nach der Montage keine Justierung mehr gegeben ist.

Wie Fig. 19 zeigt, besitzt die Führung 6 einen Innendurchmesser o. Zur Montage ist auf den Stift 5 eine Kappe 50 aufgesetzt, die in Fig. 19 gezeigt ist. Die Kappe 50 ist vorteilhaft formschlüssig am Stift 5 gehalten. Die Kappe 50 besitzt einen Außendurchmesser n, der größer als der Innendurchmesser o der Führung 6 ist. Dadurch ist der Stift 5 während der Montage in seiner Längsrichtung an der Führung 6 gesichert und kann nicht durch die Führung 6 hindurch nach unten rutschen.

Die Figuren 20 und 21 zeigen ein Ausführungsbeispiel mit verkürzter Länge der Schraube 59. Der Aufbau der Anordnung ist gleich wie in Fig. 18 und 19, so dass die gleichen Bezugszeichen verwendet sind.

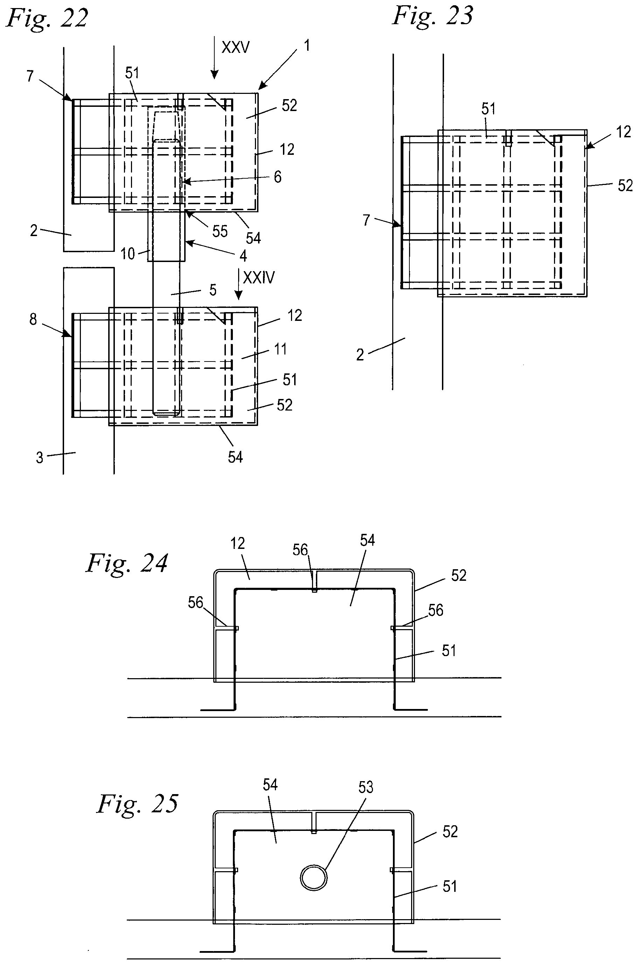

Die Figuren 22 bis 25 zeigen ein weiteres Ausführungseispiel einer Fassadenplattenanordnung 1 mit einem Verstiftungssystem 4. An der unteren Fassadenplatte 3 ist ein Stift 5 fixiert. Der Stift 5 ist über Vergussmasse 11 in einer Tasche 12 gehalten. Die Tasche 12 ist von einem Formteil 52 begrenzt, das beispielsweise ein Kunststoffbauteil sein kann. In die Fassadenplatte 3 und in die Vergussmasse 11 ragt eine Bewehrung 51. Über die Bewehrung 51 werden Kräfte von der Vergussmasse 11 in die Fassadenplatte 3 übertragen. Weil die Kraftübertragung nicht über das Formteil 52 erfolgt, muss dieses keine großen Kräfte abfangen können. Das Formteil 52 dient lediglich als Gussform für die Vergussmasse 11 bei der Herstellung der Fassadenplattenanordnung 1. Das Formteil 52 ist nach unten durch einen Boden 54 verschlossen.

An der oberen Fassadenplatte 2 ist eine Führungshülse 10 in entsprechender Weise fixiert. Die Tasche 12 besitzt eine Öffnung 55, die in einem Boden 54 des Formteils 52 vorgesehen ist.

Fig. 23 zeigt die Anordnung vor dem Einfüllen der Vergussmasse. Die Bewehrung 51 ragt in die Fassadenplatte 2 und die Tasche 12. Das Formteil 52 kann an seiner der Fassadenplatte 2 zugewandten Seite in die Fassadenplatte 2 eingegossen sein. Auch eine andere Fixierung des Formteils 52 an der Fassadenplatte 2 kann vorteilhaft sein.

Wie die Figuren 24 und 25 zeigen, sind am Formteil 52 Fixierungsvorsprünge 56 ausgebildet, die ins Innere der Tasche 12 ragen und an denen die Bewehrung 51 gehalten ist. Über die Bewehrung 51 ist das Formteil 52 dadurch an der jeweiligen Fassadenplatte 2, 3 fixiert.

Fig. 24 zeigt eine Tasche 12, die zur Anordnung an einer unteren Fassadenplatte 3 ausgebildet ist. Der Boden 54 ist als durchgehende Fläche ausgebildet. Fig. 25 zeigt ein Formteil 52, das zur Anordnung an der oberen Fassadenplatte 2 oder an der unteren Fassadenplatte 3 vorgesehen ist. Im Boden 54 ist eine Sollbruchstelle 53 vorgesehen, die im Ausführungsbeispiel kreisförmig ausgebildet ist. An der Sollbruchstelle 53 kann Material des Bodens 54 ausgebrochen werden, um die in Fig. 22 gezeigte Öffnung 55 für die Führungshülse 10 oder eine entsprechende Öffnung für den Stift 5 zu schaffen, wenn der Stift 5 an der oberen Fassadenplatte 2 festgelegt wird. In einer alternativen Ausführungsvariante ist die Führungshülse 10 am Boden 54 des Formteils 52 der oberen Fassadenplatte 2 fixiert.

In allen Ausführungsbeispielen bezeichnen gleiche Bezugszeichen einander entsprechende Elemente. Weitere vorteilhafte Ausführungsbeispiele ergeben sich durch beliebige Kombination der Merkmale der einzelnen Ausführungsbeispiele miteinander. Bei allen Ausführungsbeispielen kann der Stift 5 in alternativer Gestaltung in einer Führung 6' angeordnet sein, die Bewegungen in horizontaler Richtung parallel zur Ebene der Fassadenplatten 2, 3 zulässt.

## Patentansprüche

1. Fassadenplattenanordnung umfassend eine erste Fassadenplatte (2, 3) und eine zweite Fassadenplatte (3, 2), die übereinander angeordnet sind, und ein Verstiftungssystem (4) zur Verstiftung der Fassadenplatten (2, 3) miteinander, wobei das Verstiftungssystem (4) einen Stift (5) und eine Führung (6, 6') umfasst, wobei der Stift (5) eine Längsmittelachse (9) besitzt, wobei der Stift (5) in Richtung seiner Längsmittelachse (9) verschiebbar in der Führung (6, 6') geführt ist, wobei die Führung (6, 6') an der zweiten Fassadenplatte (3, 2) angeordnet ist, wobei der Stift (5) in die Führung (6, 6') ragt, wobei der Stift (5) und die Führung (6, 6') vollständig außerhalb der Fassadenplatten (2, 3) angeordnet sind und die Führung (6, 6') über eine zweite Verankerungseinrichtung (8, 7) an der zweiten Fassadenplatte (3, 2) festgelegt ist,
**dadurch gekennzeichnet, dass** der Stift (5) über eine erste Verankerungseinrichtung (7, 8) an der ersten Fassadenplatte (2, 3) festgelegt ist, und dass
- die Führung (6, 6') in einer Führungshülse (10) ausgebildet ist, wobei die Führungshülse (10) zumindest während des Montagevorgangs gegenüber der zweiten Verankerungseinrichtung (8, 7) justierbar ist
oder
- der Stift (5) an der ersten Verankerungseinrichtung (7, 8) über Vergussmasse (11) gehalten ist, wobei der Stift (5) während des Montagevorgangs gegenüber der ersten Verankerungseinrichtung (7, 8) positionierbar ist.

2. Fassadenplattenanordnung nach Anspruch 1,
**dadurch gekennzeichnet, dass** die Verankerungseinrichtungen (7, 8) mindestens teilweise in der zugeordneten Fassadenplatte (2, 3) eingegossen sind.

3. Fassadenplattenanordnung nach Anspruch 1 oder 2,
**dadurch gekennzeichnet, dass** der Stift (5) senkrecht zur Ebene der Fassadenplatten (2, 3) unverschiebbar in der Führung (6, 6') geführt ist.

4. Fassadenplattenanordnung nach einem der Ansprüche 1 bis 3,
**dadurch gekennzeichnet, dass** die Führung (6, 6') mit der zugeordneten Verankerungseinrichtung (7, 8) über Vergussmasse (11) verbunden ist.

5. Fassadenplatte nach Anspruch 1,
**dadurch gekennzeichnet, dass** Mittel zur Fixierung des Stifts (5) während des Aushärtens der Vergussmasse (11) vorgesehen sind.

6. Fassadenplattenanordnung nach Anspruch 4 oder 5
**dadurch gekennzeichnet, dass** die Vergussmasse (11) in einer fest mit der zugeordneten Verankerungseinrichtung (7, 8) verbundenen Tasche (12) angeordnet ist.

7. Fassadenplattenanordnung nach Anspruch 6,
**dadurch gekennzeichnet, dass** an der Tasche (12) eine justierbare Abstützvorrichtung (33) zur horizontalen Abstützung mindestens einer Fassadenplatte (2, 3) an einer Tragstruktur (31) angeordnet ist.

8. Fassadenplattenanordnung nach Anspruch 6 oder 7,
**dadurch gekennzeichnet, dass** die Tasche (12) an der Verankerungseinrichtung (7, 8) angeschweißt ist.

9. Fassadenplattenanordnung nach Anspruch 6 oder 7,
**dadurch gekennzeichnet, dass** an einem die Tasche (12) bildenden Bauteil mindestens ein Verankerungselement (40) der Verankerungseinrichtung (7, 8) ausgebildet ist.

10. Fassadenplattenanordnung nach Anspruch 6 oder 7,
**dadurch gekennzeichnet, dass** die Verankerungseinrichtung (7, 8) durch eine Bewehrung (51) gebildet ist, wobei die Bewehrung (51) sich in die Tasche (12) und in die zugeordnete Fassadenplatte (2, 3) erstreckt, und dass die Tasche (12) mindestens teilweise durch ein Formteil (52) gebildet ist, das die Gussform für die Vergussmasse (11) bildet.

11. Fassadenplattenanordnung nach einem der Ansprüche 4 bis 10,
**dadurch gekennzeichnet, dass** sowohl der Stift (5) als auch die Führung (6, 6') in einer Tasche (12) mit Vergussmasse (11) eingegossen sind und dass beide Taschen (12) und beide Verankerungseinrichtungen (7, 8) bis auf eine Öffnung (55) im Boden (41, 54) einer der Taschen (12) identisch ausgebildet sind.

12. Fassadenplattenanordnung nach einem der Ansprüche 1 bis 11,
**dadurch gekennzeichnet, dass** die Führung (6, 6') über eine Schraubverbindung mit der Verankerungseinrichtung (7) verbunden ist.

13. Fassadenplattenanordnung nach einem der Ansprüche 1 bis 12,
**dadurch gekennzeichnet, dass** der Stift (5) an der zugeordneten Verankerungseinrichtung (7) über eine Schweißverbindung gehalten ist.

14. Fassadenplattenanordnung nach einem der Ansprüche 1 bis 13,
**dadurch gekennzeichnet, dass** die Fassadenplatten (2, 3) eine Dicke (a) von weniger als 50 mm, insbesondere weniger als 40 mm besitzen, dass die Fassadenplatten (2, 3) insbesondere Betonplatten, bevorzugt Betonplatten aus hochfestem Beton oder ultrahochfestem Beton (UHPC), sind und dass die Fassadenplatten (2, 3) bevorzugt eine Bewehrung (36) aufweisen.

15. Fassadenplattenanordnung nach einem der Ansprüche 1 bis 14,
**dadurch gekennzeichnet, dass** die Verankerungseinrichtung (7, 8) sich über mindestens die Hälfte, insbesondere über mindestens 75% der Dicke (a) der zugeordneten Fassadenplatte (2, 3) erstreckt.

## Claims

1. Façade panel arrangement comprising a first façade panel (2, 3) and a second façade panel (3, 2), which are arranged on top of each other, and a pinning system (4) for pinning the façade panels (2, 3) to each other, wherein the pinning system (4) comprises a pin (5) and a guide (6, 6'), wherein the pin (5) has a longitudinal central axis (9), wherein the pin (5) is guided in the guide (6, 6') for displacement in the direction of its longitudinal central axis (9), wherein the guide (6, 6') is located at the second façade panel (3, 2), wherein the pin (5) extends into the guide (6, 6'), wherein the pin (5) and the guide (6, 6') are located completely outside the façade panels (2, 3) and the guide (6, 6') is fixed to the second façade panel (3, 2) by way of a second anchoring device (8, 7) **characterised in that** the pin (5) is fixed to the first façade panel (2, 3) by way of a first anchoring device (7, 8), and **in that**
- the guide (6, 6') is formed in a guide sleeve (10), the guide sleeve (10) being adjustable relative to the second anchoring device (8, 7) at least during the assembly process,
or
- the pin (5) is held at the first anchoring device (7, 8) by means of grouting compound (11), the pin (5) being capable of positioning relative to the first anchoring device (7, 8) during the assembly process.

2. Façade panel arrangement according to claim 1,
**characterised in that** the anchoring devices (7, 8) are at least partially cast into the associated façade panel (2, 3).

3. Façade panel arrangement according to claim 1 or 2,
**characterised in that** the pin (5) is held in the guide (6, 6') incapable of displacement perpendicular to the plane of the façade panels (2, 3).

4. Façade panel arrangement according to any of claims 1 to 3,
**characterised in that** the guide (6, 6') is joined to the associated anchoring device (7, 8) by way of grouting compound (11).

5. Façade panel arrangement according to claim 1,
**characterised in that** means are provided for fixing the pin (5) while the grouting compound (11) hardens.

6. Façade panel arrangement according to claim 4 or 5,
**characterised in that** the grouting compound (11) is located in a pocket (12) permanently joined to the associated anchoring device (7, 8).

7. Façade panel arrangement according to claim 6,
**characterised in that** an adjustable supporting device (33) is arranged at the pocket (12) for the horizontal support of at least one façade panel (2, 3) on a support structure (31).

8. Façade panel arrangement according to claim 6 or 7,
**characterised in that** the pocket (12) is welded to the anchoring device (7, 8).

9. Façade panel arrangement according to claim 6 or 7,
**characterised in that** at least one anchoring element (40) of the anchoring device (7, 8) is formed at a component forming the pocket (12).

10. Façade panel arrangement according to claim 6 or 7,
**characterised in that** the anchoring device (7, 8) is represented by a reinforcement (51), the reinforcement (51) extending into the pocket (12) and the associated façade panel (2, 3), and **in that** the pocket (12) is at least partially represented by a moulding (52) forming the casting mould for the grouting compound (11).

11. Façade panel arrangement according to any of claims 4 to 10,
**characterised in that** both the pin (5) and the guide (6, 6') are cast into a pocket (12) with grouting compound (11), and **in that** both pockets (12) and both anchoring devices (7, 8) are designed identically apart from an opening (55) in the base (41, 54) of one of the pockets (12).

12. Façade panel arrangement according to any of claims 1 to 11,
**characterised in that** the guide (6, 6') is joined to the anchoring device (7) by means of a screw connection.

13. Façade panel arrangement according to any of claims 1 to 12,
**characterised in that** the pin (5) is held on the associated anchoring device (7) by means of a welded joint.

14. Façade panel arrangement according to any of claims 1 to 13,
**characterised in that** the façade panels (2, 3) have a thickness (a) of less than 50 mm, in particular of less than 40 mm, **in that** the façade panels (2, 3) are concrete panels in particular, preferably concrete panels of high-performance concrete or ultra-high-performance concrete (UHPC), and **in that** the façade panels (2, 3) preferably have a reinforcement (36).

15. Façade panel arrangement according to any of claims 1 to 14,
**characterised in that** the anchoring device (7, 8) extends across at least half, in particular across at least 75%, of the thickness (a) of the associated façade panel (2, 3).

## Revendications

1. Dispositif de panneaux de façade comprenant un premier panneau de façade (2, 3) et un deuxième panneau de façade (3, 2) qui sont disposés l'un au-dessus de l'autre, et un système de brochage (4) pour le brochage des panneaux de façade (2, 3) l'un avec l'autre,
dans lequel le système de brochage (4) comprend une broche (5) et un guide (6, 6'),
dans lequel la broche (5) possède un axe longitudinal médian (9),
dans lequel la broche (5) est guidée dans le guide (6, 6') en étant mobile dans la direction de son axe longitudinal médian (9),
dans lequel le guide (6, 6') est disposé sur le deuxième panneau de façade (3, 2), dans lequel la broche (5) dépasse dans le guide (6, 6'),
dans lequel la broche (5) et le guide (6, 6') sont disposés complètement en dehors des panneaux de façade (2, 3) et le guide (6, 6') est immobilisé par un deuxième dispositif d'ancrage (8, 7) sur le deuxième panneau de façade (3, 2),
**caractérisé en ce que** la broche (5) est immobilisée par un premier dispositif d'ancrage (7, 8) sur le premier panneau de façade (2, 3), et **en ce que**
- le guide (6, 6') est formé dans un manchon de guidage (10),
dans lequel le manchon de guidage (10) est ajustable au moins pendant l'opération de montage par rapport au deuxième dispositif d'ancrage (8, 7)
ou
- la broche (5) est retenue sur le premier dispositif d'ancrage (7, 8) par une masse de scellement (11),
dans lequel la broche (5) est positionnable pendant l'opération de montage par rapport au premier dispositif d'ancrage (7, 8).

2. Dispositif de panneaux de façade selon la revendication 1,
**caractérisé en ce que** les dispositifs d'ancrage (7, 8) sont au moins partiellement scellés dans le panneau de façade (2, 3) associé.

3. Dispositif de panneaux de façade selon la revendication 1 ou 2,
**caractérisé en ce que** la broche (5) est guidée dans le guide (6, 6') en étant non mobile perpendiculairement au plan des panneaux de façade (2, 3).

4. Dispositif de panneaux de façade selon l'une des revendications 1 à 3,
**caractérisé en ce que** le guide (6, 6') est relié au dispositif d'ancrage (7, 8) associé par la masse de scellement (11).

5. Dispositif de panneaux de façade selon la revendication 1,
**caractérisé en ce qu'**il est prévu des moyens pour la fixation de la broche (5) pendant le durcissement de la masse de scellement (11).

6. Dispositif de panneaux de façade selon la revendication 4 ou 5,
**caractérisé en ce que** la masse de scellement (11) est disposée dans une poche (12) reliée solidement au premier dispositif d'ancrage (7, 8) associé.

7. Dispositif de panneaux de façade selon la revendication 6,
**caractérisé en ce que** sur la poche (12) est disposé un dispositif d'appui ajustable (33) pour l'appui horizontal d'au moins un panneau de façade (2, 3) contre une structure porteuse (31).

8. Dispositif de panneaux de façade selon la revendication 6 ou 7,
**caractérisé en ce que** la poche (12) est soudée au dispositif d'ancrage (7, 8).

9. Dispositif de panneaux de façade selon la revendication 6 ou 7,
**caractérisé en ce que** sur un élément de construction formant la poche (12) est formé au moins un élément d'ancrage (40) du dispositif d'ancrage (7, 8).

10. Dispositif de panneaux de façade selon la revendication 6 ou 7,
**caractérisé en ce que** le dispositif d'ancrage (7, 8) est formé par une armature (51), dans lequel l'armature (51) s'étend dans la poche (12) et dans le panneau de façade (2, 3) associé, et **en ce que** la poche (12) est formée au moins partiellement par un élément de forme (52) qui forme le moule de coulage pour la masse de scellement (11).

11. Dispositif de panneaux de façade selon l'une des revendications 4 à 10,
**caractérisé en ce que** la broche (5) aussi bien que le guide (6, 6') sont scellés dans une poche (12) avec la masse de scellement (11) et **en ce que** les deux poches (12) et les deux dispositifs d'ancrage (7, 8) ont des formes identiques sauf une ouverture (55) dans le fond (41, 54) de l'une des poches (12).

12. Dispositif de panneaux de façade selon l'une des revendications 1 à 11,
**caractérisé en ce que** le guide (6, 6') est relié par une liaison à vis au dispositif d'ancrage (7).

13. Dispositif de panneaux de façade selon l'une des revendications 1 à 12,
**caractérisé en ce que** la broche (5) est retenue sur le dispositif d'ancrage (7) associé par une liaison soudée.

14. Dispositif de panneaux de façade selon l'une des revendications 1 à 13,
**caractérisé en ce que** les panneaux de façade (2, 3) possèdent une épaisseur (a) de moins de 50 mm, en particulier de moins de 40 mm, **en ce que** les panneaux de façade (2, 3) sont en particulier des panneaux de béton, de préférence des panneaux de béton en béton à haute résistance ou en béton à ultrahaute résistance (UHPC), et **en ce que** les panneaux de façade (2, 3) comportent de préférence une armature (36).

15. Dispositif de panneaux de façade selon l'une des revendications 1 à 14, **caractérisé en ce que** le dispositif d'ancrage (7, 8) s'étend sur au moins la moitié, en particulier sur au moins 75 % de l'épaisseur (a) du panneau de façade (2, 3) associé.
